Europäisches Patentamt

(19) European Patent Office

Office européen des brevets

(11) Numéro de publication: **0 088 851**

**A1**

## DEMANDE DE BREVET EUROPEEN

(21) Numéro de dépôt: **82400465.9**

(22) Date de dépôt: **12.03.82**

(51) Int. Cl.³: **G 05 D 23/24**
**A 01 G 31/02**

(30) Priorité: **12.03.82 FR 8204250**

(43) Date de publication de la demande:
**21.09.83 Bulletin 83/38**

(84) Etats contractants désignés:
**AT BE CH DE IT LI LU NL SE**

(71) Demandeur: **Nudelmont, Jean-Claude**
**7 rue Soyer**
**F-92200 Neuilly sur Seine(FR)**

(72) Inventeur: **Nudelmont, Jean-Claude**
**7 rue Soyer**
**F-92200 Neuilly sur Seine(FR)**

(74) Mandataire: **Blain, Alfred Max**
**22, avenue de l'Opéra**
**F-75001 Paris(FR)**

(54) **Dispositif de régulation de température et application aux bacs chauffants pour culture hors sol.**

(57) Dispositif de régulation de la température de tout milieu chauffé par une résistance chauffante et notamment du contenu d'un bac chauffant pour culture hors sol.

Afin d'éviter à la fois la surchauffe du contenu du bac et du fond du bac, le dispositif de régulation comporte à la fois une première sonde (13) constituée par une résistance variable à coefficient de température négatif associée à un premier circuit (Z3, D10, Z2) de contrôle de l'interruption de chauffage de (Z1) par la commande des triac (D2 et D1), de telle sorte que la température du milieu contenu dans le bac ne puisse dépasser la température T1 affichée par le potentiomètre (17) et une seconde sonde (23) constituée par une résistance variable à coefficient de température positif insérée dans le circuit de commande de (D2 et D1) de telle sorte que dès que l'impédance de (23) croît jusqu'à une valeur déterminée lorsque sa température atteint une valeur T2, le triac (D2) coupe le conducteur de (D1) et de ce fait interrompt le chauffage de (Z1) alimenté en tension alternative. Ainsi l'élément (Z1) ne peut détériorer la paroi chauffée au cours de l'élévation de température du contenu du bac.

Fig.1

EP 0 088 851 A1

Croydon Printing Company Ltd.

La présente invention concerne un dispositif de régulation de température ainsi que son application à un bac chauffant indépendant dont la température réglable doit être maintenue de façon précise à la valeur prédéterminée choisie, notamment pour l'activation de pousses végétales en culture hors sol.

La nécessité d'accroître certaines productions végétales a conduit à développer la culture hors sol et l'on connaît déjà des installations comprenant des réseaux superposés de bac chauffants dont la température est maintenue constante par la présence de sondes thermiques et sensibles reliées, au moyen de cordons électriques, a des thermostats disposés dans une armoire de distribution électrique desservant l'ensemble des bac chauffants.

De telles installations ont évidemment l'avantage de permettre le réglage et la maintien automatique aisé et à une même température prédéterminée de nombreux bacs à partir d'une armoire de distribution électrique unique, mais ne sont pas du tout adaptées aux réglages de températures différentes selon la nature et les variétés des pousses choisies, de sorte qu'en dépit de l'intérêt de telles installations elles ne conviennent qu'a des cas bien particuliers. En outre elles présentent des inconvénients d'encombrement, et de manque de souplesse dans leur utilisation, l'ensemble des bacs devant toujours se trouver à des températures identiques.

On pourrait éventuellement modifier de telles installations afin d'imposer des valeurs de températures différentes en fonction de la position des bacs mais l'on se heurte non seulement au problème de l'encombrement, chaque sonde thermique sensible étant impérativement reliée à un thermostat donné de l'armoire de distribution électrique, mais encore à celui du contrôle précis de la température.

En effet il n'existe pas actuellement de dispositif de contrôle de la régulation de la température susceptible d'être incorporé dans un bac destiné à la culture hors sol. Les dispositifs sensibles nécessitent un dispositif annexe et relativement encombrant qui finalement fait réapparaître les mêmes difficultés que celles qui viennent d'être exposées, les autres dispositifs ne permettent pas un contrôle efficace de la régulation de la température, dès que le milieu dont la température est à contrôler se modifie comme par exemple dans le cas

**BAD ORIGINAL**

d'une culture hors sol. Même dans le cas particulier de la culture d'une seule espèce végétale déterminée il n'était pas possible de faire varier les paramètres d'un dispositif de régulation de la température en fonction des modifications du milieu chaque bac engendrant des écarts de température par rapport aux tolérances admissibles.

L'objet de la présente invention est un dispositif de régulation précis de la température d'un milieu chauffé au moyen d'au moins un élément chauffant et comportant un dispositif d'affichage de la température désirée caractérisé en ce qu'il comprend une première sonde détectant la température T1 du milieu chauffant et une seconde sonde détectant la température T2 de l'élément chauffant, de telle sorte que tout dépassement, de la température T1 captée par la première sonde, coupe le circuit de l'élément chauffant et que tout dépassement de la température T2 captée par la seconde sonde coupe le circuit d'alimentation du circuit chauffant.

L'un des principaux avantages du dispositif est de permettre une certaine tolérance de mise en place des sondes, amenuisant les effets des écarts plus ou moins importants entre la température réelle du milieu et la température captée T1, le contrôle de la température T2 de l'élément chauffant permettant la coupure automatique du circuit d'alimentation de l'élément chauffant pour une température T2 déterminée en fonction de la température maximale que peut supporter la paroi chauffée par l'élément chauffant en vue de porter le milieu avec lequel elle est en contact à la température T1. Une telle disposition est particulièrement importante lorsque la paroi est formée d'un matériau plastique ne pouvant supporter une élévation de température au delà d'une certaine limite.

Un autre avantage de ce dispositif est aussi d'éviter toute surchauffe lorsque les conditions de transfert de chaleur ayant varié de façon importante entre le milieu dont on capte la température et la sonde captent cette température, notamment dans le cas où le milieu subit une importante transformation chimique ou biologique. C'est ainsi qu'il peut arriver qu'en dépit de l'apport d'énergie à l'élément chauffant, le milieu chauffé n'atteint plus la température T1 aussi rapidement que dans les conditions initiales. Dans ce cas la température de l'élément chauffant croît jusqu'à ce que la

BAD ORIGINAL

seconde sonde atteigne la température T2. La coupure brusque du circuit d'alimentation de l'élément chauffant permet d'éviter d'une part la détérioration de cet élément et d'autre part une surchauffe du bain lors de la reprise rapide du chauffage.

Une autre caractéristique de l'invention est de choisir pour sonde de détection des températures T1 et T2 des résistances variables à coefficient de température l'une positive l'autre négative permettant d'adapter aisément le dispositif de régulation des températures aux paramètres des milieux chauffants et chauffés l'alimentation du circuit de chauffage s'effectuant en courant alternatif en vue de faciliter le contrôle des cycles de chauffage et d'arrêt.

Un autre objet de l'invention est l'application d'un tel dispositif de régulation à un bac pour culture hors sol, du type comprenant un élément chauffant compris entre un couvercle inférieur et le fond du bac, ce dernier recevant un milieu quelconque liquide granuleux ou végétal à maintenir à température donnée, caractérisé en ce que la première sonde de température T1 du milieu contenu dans le bac se trouve dans un logement environné par ledit milieu, la sonde étant directement reliée à l'intérieur de ce logement à un thermostat dont une partie au moins est encastrée entre le fond du bac et le couvercle inférieur, de telle sorte que seule la partie du thermostat comprenant le moyen d'affichage de la température T1 émerge avec les fils d'alimentation de l'élément chauffant contrôlé par une seconde sonde, du double fond.

Un tel agencement présente l'avantage même dans le cas où les bacs se présentent sous la forme de cuvettes peu profondes mais allongées, de disposer aisément le thermostat dans une partie latérale du double fond et la sonde en tout point désiré et notamment à l'aplomb du centre du bac lorsque l'on a besoin de se référer à la température précise de ce point.

Une autre caractéristique de l'invention réside en la prévision dans le fond du bac d'un logement de la seconde sonde, de préférence dans une zone médiane du bac, ce logement se présentant sous la forme d'un faible relief sur le fond de celui-ci, de telle sorte que l'espace compris entre la paroi interne du couvercle inférieur et la paroi inférieure du fond du bac reste réduit et déterminé par les seules épaisseurs du moyen chauffant et de son support disposé sur la paroi interne du couvercle inférieur , la sonde de contrôle de la température de l'élément chauffant étant reliée thermiquement à celui-ci.

Un avantage de cette disposition réside dans le fait que l'on peut se référer à la température d'un point particulierement précis situé au niveau de chauffe du fond du bac et situé en un lieu médian dans une partie du bac où les températures risquent de croître rapidement et doivent être surveillées afin d'éviter toutes réactions nuisibles.

Ainsi chaque bac peut être réglé à des températures bien déterminées variant selon les utilisations choisies sans que l'on soit tributaire de raccordements de plus ou moins grandes longueurs entre armoire d'alimentation électrique commune et bacs, le dispositif de régulation thermique à double contrôle permettant de tenir aisément compte du milieu, des formes et de la nature des parois de transfert de chaleur.

En outre, lorsque les éléments chauffants sont des résistances électriques se présentant sous forme d'un ruban au sein d'un film isolant plastique, ce qui permet d'obtenir aisément des températures homogènes sur tout l'étendue de la paroi inférieure du bac et que celui-ci contient un liquide bon conducteur de la chaleur, on peut utiliser une sonde de contrôle de la température du bain au voisinage immédiat du dispositif de régulation, la sonde et son logement traversant la paroi du bac de façon étanche et faisant corps avec le dispositif. On réalise de la sorte des bacs susceptibles d'être utilisés de façon les plus diverses en fonction des pousses d'espèces différentes utilisées dans des bacs séparés. Chaque bac pouvant contenir des séparations tout en étant chauffé par plusieurs films dont la température uniforme est contrôlée par la seconde sonde reliée thermiquement à deux films voisins par une feuille d'aluminium.

D'autres caractéristiques et avantages ressortiront de la description suivante faite en référence aux dessins annexés qui représentent à titre d'exemple non limitatif un dispositif de régulation de la température et un mode de réalisation de bac chauffant indépendant dont les températures du bain et de l'élément chauffant sont contrôlées.

Sur les dessins :

La figure 1 est le schéma électrique du dispositif de régu-

BAD ORIGINAL

lation de température,

Les figures 2, 3 et 4 la représentation sous forme de diagrammes des cycles de commande de l'élément chauffant en fonction des températures,

La figure 5 est la représentation schématique de la paroi latérale d'un bac porteur du régulateur de température,

La figure 6 une vue en coupe longitudinale d'une portion du bac et,

La figure 7 la vue en coupe transversale d'un bac à double travées.

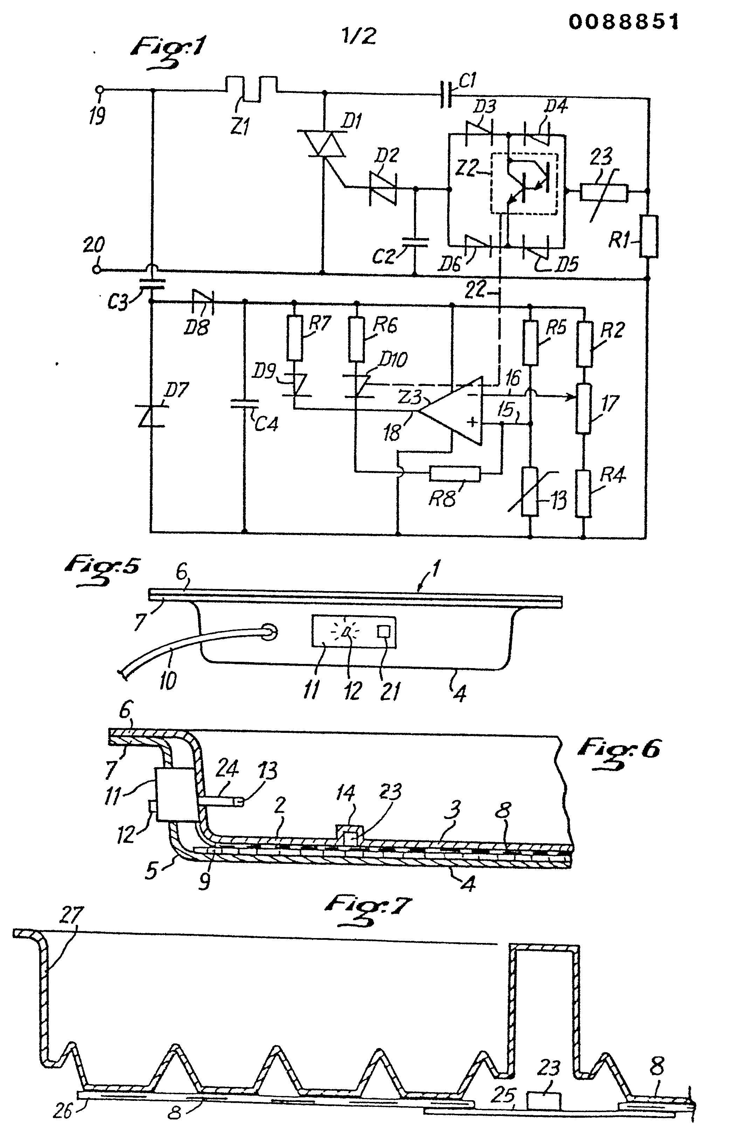

Le circuit électrique du dispositif de régulation de la température d'un milieu quelconque liquide, granuleux ou comprenant des cultures hors sol, chauffé par un élément chauffant tel que la résistance Z1 figure 1 comprend essentiellement : une sonde électrique 13 de la température du milieu et une sonde électrique 23 de la température de l'élément chauffant Z1.

De préférence la sonde 13 est une résistance variable à coefficient de température négatif et la sonde 23 une résistance variable à coefficient de température positif.

La résistance variable 13 est connectée à la résistance 5 pour former la première branche d'un pont, l'autre branche étant constituée par les résistances R2 et R4 connectées en série de part et d'autre du potentiomètre 17. Celui-ci est commandé par exemple par l'index 12 d'affichage de la température désirée monté de préférence sur le boitier contenant le dispositif. L'entrée négative de l'amplificateur opérationnel Z3 est branchée par la connexion 16 au potentiomètre 17 et son entrée positive, par la liaison 15, à la première branche du pont composée de la résistance variable 13 et de la résistance R5.

Les bornes 19 et 20 du dispositif sont branchées dans l'exemple figuré à une tension alternative de 220 V. Une diode de Zener D7, une diode D8 et le condensateur C4 règlent la tension d'alimentation de l'amplificateur opérationnel Z3, la tension étant fournie par le condenstaeur C3 reliée d'une part aux diodes D7 et D8 et d'autre part à la borne 19. Lorsque la tension de l'entrée positive 15 de l'amplificateur opérationnel Z3 dépasse la tension fournie en 16 par le potentiomètre 17, la sortie 18 de l'amplificateur opérationnel Z3 s'abaisse très rapidement en raison du circuit de réaction

**0088851**

comportant la résistance R8. La diode photo-emissive D10 reliée à la résistance R6 et la diode luminescente D9 en parallèle reliée à la résistance R7 s'excitent. La diode D9 permet par un voyant approprié tel que 21 figure 6, de connaître l'état de fonctionnement de l'amplificateur opérationnel Z3, c'est-à-dire tout dépassement de température du milieu. La diode D10 est couplée, comme l'indique de façon schématique les traits interrompus 22, à une paire de photo-transistors Z2 montés en pont dans le circuit D3 à D6 de sorte que dès que la source lumineuse fournie par la diode D10 rend conducteurs les photo-transistors Z2 dont la polarité est contrôlée par les branches du pont formées des diodes D3, D4, D5 et D6. l'impédance Z2 croît.

L'élément Triac D1 est alors commuté par le condensateur C2 branché à la borne 20 et au point commun de D2. D3 et D6 entraînant la coupure du Triac D1. Ainsi l'élément chauffant Z1 normalement alimenté en tension par le Triac D1 connecté à la borne 20 cesse de recevoir tout courant à la coupure de D1 par D2.

Dès que la température du milieu permet à la sonde 13 de communiquer une tension à l'entrée 15 de l'amplificateur opérationnel Z3 égale ou inférieure à celle affichée par l'index 11 du potentiomètre 17 la diode photo-émissive D10 cesse de rendre les photo-transistors Z2 conducteurs. entraînant à nouveau la commutation du Triac D1 par D2.

La résistance variable 23 à coefficient positif de température est couplée thermiquement à la résistance chauffante Z1 de telle sorte que dès que celle-ci dépasse une température donnée : 68° C dans l'exemple considéré, l'impédance de la sonde 23 connectée au circuit Z3, D3 à D6 croît considérablement. Cet accroissement entraîne un accroissement de la tension aux bornes du condensateur C2 amenant comme dans le cas précédent la coupure de D1 par le Triac D2 et l'arrêt momentané du chauffage de l'élément Z1.

Ainsi quels que soient les écarts existant entre le moment où le milieu atteint une température T1 et le moment où la sonde atteint cette température le dispositif de régulation décrit permet par le contrôle de la température T1 de l'élément chauffant Z1 d'éviter tout dépassement de la température des parois de transfert de chaleur au milieu dont la tempéra-

BAD ORIGINAL

ture est contrôlée. En outre le choix des sondes de coefficient de température l'un positif l'autre négatif accroît la rapidité de la coupure de l'élément chauffant et du rétablissement de son circuit d'alimentation.

Ainsi si l'on se reporte à la figure 2 où l'on a représenté en A la température du milieu à contrôler, en T1 la température à ne pas dépasser, en B les cycles de coupure et de conduction de l'élément chauffant Z1, en T2 la température de l'élément chauffant à ne pas dépasser et en C la température de l'élément chauffant on voit que dès que la température TO est atteinte : point $a_o$, l'élément chauffant est commuté à l'instant $b_o$ et que dès que le bain atteint la température T1 au point $a_1$ l'alimentation de Z1 est coupée au point $b_1$.

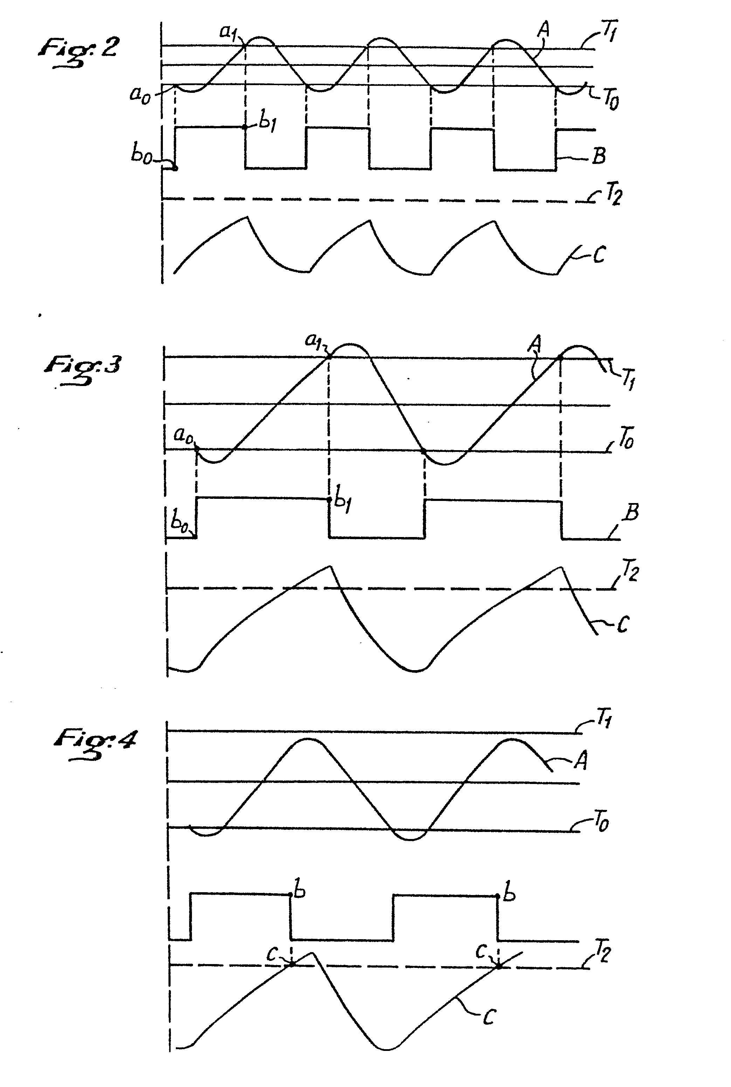

Dans le cas de la figure 3, les conditions du milieu ayant pu varier la température de l'élément chauffant croît comme l'indique la courbe C pour dépasser la température T2. Cependant le bain atteignant la température T1 la sonde 13 et éventuellement la sonde 23 peuvent couper l'alimentation de Z1.

Par contre si les conditions du milieu varient à un point tel que l'on ne puisse normalement atteindre la valeur de T1 comme le montre la figure 4, la coupure du circuit d'alimentation de Z1 s'effectue par la sonde 23 au point C de dépassement de la température T2. Bien que la température du bain n'atteigne plus la température T1 on voit cependant que la valeur moyenne du bain reste toujours au voisinage de T1 dans l'ensemble des cas tout en évitant les dépassements de température de l'élément chauffant Z1.

Ces avantages sont mis à profit notamment dans leur application aux bacs chauffants pour les cultures hors sol sans que ceux-ci soient contrôlés par des dispositifs situés dans des installations annexes coûteuses et encombrantes.

A titre d'exemple d'une telle application on a représenté en 1 figure 5 un bac chauffant équipé d'un dispositif de régulation conforme au dispositif décrit c'est-à-dire comportant une sonde de contrôle 13 de la température du milieu chauffé par le bac 1 et une sonde de contrôle 23 de la température de la résistance chauffante Z1.

Bien que le bac chauffant indépendant à thermostat incorporé ainsi constitué puisse présenter diverses formes on a représenté en 1 figures 5 et 6 un bac de faible profondeur

8

dont la longueur est au moins égale à deux fois la largeur.

Ce bac comporte un double fond étanche limité par la paroi supérieure 2 du fond 3 proprement dit et par la paroi inférieure 4 d'un couvercle inférieur 5. Ce double fond est rendu étanche par la jonction des rebords 6 du fond 3 du bac et 7 du couvercle 5.

L'étanchéité peut être obtenue soit par application directe des surfaces en regard des rebords 6 et 7 soit par application de ces surfaces sur un élément intermédiaire étanche ou éventuellement sur le bord d'un élément comportant une résistance chauffante schématisée en 8 se présentant sous la forme d'un film plastique servant d'isolant au ruban chauffant Z1.

L'élément chauffant 8 situé au dessus d'un support isolant thermique 9 peut adhérer par tout moyen à la paroi inférieure du fond 3; vernis ou colle par exemple.

Le ruban chauffant Z1 est alimenté dans le mode de réalisation représenté à titre d'exemple figure 1 sous une tension alternative de 220 volts, par le câble électrique 10, sous le contrôle du dispositif de régulation 11. L'index 12 de réglage du potentiomètre 17 permet d'afficher la température désirée qui peut par exemple être comprise entre 5 et 30°. Le voyant 21 en s'allumant permet de détecter tout dépassement de la température affichée T1.

La résistance variable 13 est choisie pour fonctionner dans le domaine désiré de température de façon à utiliser la partie linéaire de la caractéristique. Cette résistance peut être de petites dimensions, avoir une épaisseur de 2 mm et une base carrée de 4 mm de côté. Elle peut être aisément logée en tout endroit désiré du bac et de préférence dans un logement étanche tel que 24 traversant la surface latérale du fond 3 de façon à pénétrer dans le bac tout en étant reliée directement au dispositif de régulation 11.

La résistance variable 23 de contrôle de la température de l'élément chauffant est située de préférence dans un logement 14 au relief sur le fond 3 du bac de façon à être placée dans les conditions de chauffe par le film 8 analogues aux conditions de chauffe du fond 3 en tout endroit désiré.

Dans le cas où l'on utilise par exemple deux films chauffants côte à côte dans deux travées 27 comme dans le cas de la figure 7 divisant le bac longitudinalement, on dispose la sonde 23

BAD ORIGINAL

sur une feuille d'aluminium 25 en contact avec chacun des films, la sonde 23 étant reliée au boitier de régulation dans le double fond. La disposition du fond des travées 27 permet d'accroître le transfert de chaleur à partir du film 26 qui peut éventuellement épouser la forme ondulée ou dentée du fond des travées.

On obtient ainsi des types de bacs indépendants capables en raison du dispositif de régulation 11 et de la possibilité d'implantation des sondes 13 et 23 aux points les plus vulnérables d'éviter de façon certaine tout dépassement de température du milieu contrôlé même dans le cas de variations importantes des caractéristiques thermiques du milieu lui-même comme dans le cas des cultures hors sol de tout type.

REVENDICATIONS

1°) Dispositif de régulation de la température d'un milieu chauffé au moyen d'au moins un élément chauffant et comportant un dispositif d'affichage de la température désirée caractérisé en ce qu'il comprend une première sonde de température (13) indicatrice de la température T1 dudit milieu et une seconde sonde de température (23) indicatrice de la température T2 de l'élément chauffant(Z1), la première sonde (13) provoquant l'excitation d'un circuit de contrôle (D10) de la commande de coupure de l'élément chauffant (Z1) pour toute température du milieu supérieure à T1 et la seconde sonde (23) provoquant un changement d'impédance du circuit de commande de la coupure de l'élément chauffant (Z1) pour toute température de celui-ci ou de son environnement supérieure à T2 , de telle sorte que la coupure de l'élément chauffant (Z1) se produit immédiatement pour tout dépassement de la température T1 du milieu contrôlé ou de la température T2 de l'élément chauffant.

2°) Dispositif de régulation tel que revendiqué en 1 dont le circuit de contrôle du circuit de coupure de l'élément chauffant (Z1) comprend un amplificateur opérationnel (Z3) dont une entrée (16) est connectée au potentiomètre (17) d'affichage de la température désirée T1 du milieu chauffé et dont l'autre entrée (15) est connectée à la première sonde de température (13), tout dépassement de T1 entraînant l'excitation d'une diode photo-émissive (D10) contrôlant un élément photo-transistor (Z2) et entraînant la coupure du circuit d'alimentation (D1) de l'élément chauffant (Z1).

3°) Dispositif de régulation tel que revendiqué en 2 dont le circuit d'alimentation (D1) de l'élément chauffant (Z1) est coupé par un élément triac (D2) commuté par l'accroissement d'impédance de la seconde sonde (23) contrôlant la température T2 de l'élément chauffant (Z1).

4°) Dispositif de régulation tel que revendiqué dans l'une quelconque des revendications 1 à 3 dont la première sonde de température (13) du milieu chauffé à la température T1 est une résistance variable à coefficient de température négatif et la seconde sonde de température (23) de l'élément chauffant (Z1) est une résistance variable à coefficient de température positif.

5°) Dispositif de régulation tel que revendiqué dans l'une quelconque des revendications 3 et 4 dont le circuit d'alimentation de l'élément chauffant (Z1) est connecté aux bornes (19, 20) d'une source de courant alternatif au moyen d'un premier triac(D1) commandé par un second triac (D2) placé sous le contrôle de l'impédance d'un photo-transistor (Z2) commandé par le dépassement de température T1 et sous le contrôle de l'impédance de la seconde sonde (23) contrôlant le dépassement de la température T2 de l'élément chauffant (Z1).

6°) Application du dispositif de régulation revendiqué à l'une quelconque des revendications 1 à 5 à un bac pourvu d'un fond chauffant en vue d'assurer le maintien à une température donnée du milieu contenu dans le bac, et quel que soit la nature de ce milieu, liquide, granuleux ou végétal caractérisé en ce que la première sonde (13) de la température du milieu contenu dans le bac (1) se trouve environnée par ledit milieu, la sonde étant directement reliée au dispositif de régulation (11) dont une partie au moins est encastrée entre le fond (3) du bac et un couvercle inférieur (4) de telle sorte que seule la partie du dispositif (11), comprenant le moyen d'affichage de la température T1 à ne pas dépasser et commandant le potentiomètre (17), émerge à l'extérieur des parois avec les fils d'alimentation (10) de l'élément chauffant (8) dont la température est contrôlée par la seconde sonde (23).

7°) Application du dispositif de régulation tel que revendiqué en 6 dont le fond (3) du bac comporte un logement (14) en relief pour l'insertion de la seconde sonde (23), ce logement étant dimensionné pour que la sonde (23) soit disposée pour recevoir le même rayonnement thermique que le fond (3) du bac, l'élément chauffant (8) étant appliqué contre la paroi inférieure du fond (3).

8°) Application du dispositif de régulation tel que revendiqué dans l'une quelconque des revendications 6 et 7 dont la sonde (13) est insérée à l'extrémité d'un logement tubulaire (24) traversant de façon étanche la partie latérale du fond (3) de telle sorte que la sonde (13) se trouve à un niveau bien déterminé du milieu à contrôler.

9°) Application du dispositif de régulation tel que revendiqué dans l'une quelconque des revendications 6 à 8 dont la sonde (23) de contrôle de la température de l'élément chauffant (8) se trouve en contact thermique par l'intermédiaire d'une

BAD ORIGINAL

feuille métallique (25) reliant deux portions (26) 0088851
chauffant (8).

10°) Application telle que revendiquée dans l'une quelconque des revendications 6 à 9 dont le fond (27) de la paroi transmettant la chaleur et dont la température doit rester inférieure à une température T2 est ondulée ou en dents de scie, la sonde (23) étant logée sous une partie formant relief.

0088851

1/2

Fig.1

Fig.5

Fig.6

Fig.7

Fig: 2

Fig: 3

Fig: 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | <u>GB - A - 1 441 967</u> (ELECTROWAY)<br><br>* page 2, ligne 105 - page 3, ligne 70; figure *<br><br>-- | 1 | G 05 D 23/24<br>A 01 G 31/02 |
| X | <u>FR - A - 2 440 027</u> (SOCIETÉ GENERALE DE FONDERIE)<br><br>* page 3, ligne 14 - page 5, ligne 22; figure 1 *<br><br>-- | 1,4 | |
| A | <u>DE - A - 1 907 650</u> (SIEMENS)<br><br>* page 4, ligne 3 - page 5, ligne 26; figure 1 *<br><br>-- | 2,5 | |
| A | <u>FR - A - 561 672</u> (A. FABIAN)<br><br>* page 2, lignes 26-64; figures 1-3 *<br><br>------ | 6 | |

**DOMAINES TECHNIQUES RECHERCHES (Int Cl. ³)**

G 05 D
A 01 G

Le present rapport de recherche a été établi pour toutes les revendications

| Lieu de la recherche | Date d'achèvement de la recherche | Examinateur |
|---|---|---|
| La Haye | 24-06-1982 | HELOT |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-ecrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82